# EUROPEAN PATENT SPECIFICATION

(11) **EP 3 980 652 B1**
(45) Date of publication and mention of the grant of the patent: **15.11.2023**
(21) Application number: 20725718.9
(22) Date of filing: 18.05.2020
(51) Int. Cl.: F16B 25/00, E01D 19/12, E01D 22/00, F16B 37/14, E04C 5/16, E04C 5/20

(54) **REINFORCING METHOD AND SUITABLE ANCHOR CLIPS**
VERSTÄRKUNGSVERFAHREN UND GEEIGNETE ANKERCLIPS
PROCÉDÉ DE RENFORT ET CLIPS D'ANCRAGE APPROPRIÉS

(30) Priority: 07.06.2019 EP 19179040
(43) Date of publication of application: 13.04.2022
(73) Proprietor: Hilti Aktiengesellschaft, 9494 Schaan (LI)
(72) Inventor: SCHNEIDER, Roland, 6824 Schlins (AT); NERBANO, Stella, 9479 Oberschan (CH)
(74) Representative: Hilti Aktiengesellschaft Corporate Intellectual Property
(86) International application number: PCT/EP2020/063842
(87) International publication number: WO 2020/244916

(56) References cited:
- WO-A1-2011/045552
- KR-A- 20150 117 560
- US-A- 3 401 497
- US-A- 5 363 618
- US-A1- 2010 218 443

## Description

The invention relates to a method for placing an overlay on an existing layer, in particular on an existing concrete layer, according to the preamble of claim 1, in which at least one borehole is provided in the existing layer, a screw anchor having a threaded shank and a head is provided and the threaded shank is tappingly anchored in the borehole in the existing layer, so that the head of the screw anchor projects from the existing layer, at least one rebar is provided and attached to the screw anchor, and, after the threaded shank has been tappingly anchored in the borehole and the at least one rebar has been attached to the screw anchor, the overlay is cast and the at least one rebar and the head of the screw anchor are, at least partly, buried in the overlay, wherein an anchor cap is fixed to the head of the screw anchor, and the at least one rebar is attached to the screw anchor via the anchor cap. The invention also relates to an anchor cap, in particular for being used in this method, according to the preamble of claim 4.

For strengthening and rehabilitation of bridges, tunnels and civil structures, concrete overlays might be placed on existing, hardened concrete layers. In order to transfer shear over the interface between these two layers, shear connectors intended to project from the existing layer into the overlay can be placed in the existing layer before casting the overlay. As the overlay often requires rebar strengthening, rebar positioning aids for positioning and fixing the rebars before casting can be required. These positioning aids can be wire pieces, which are individually cut, bent, and secured to the shear connectors by twisting. In particular, it is known to position rebars on top of the hexagonal heads of screw anchors and to then fix the individual rebars with wire pieces that are manually applied by the installer.

US2005244244 A1 discloses shear connectors that are intended to be anchored in the existing layer both mechanically and chemically. The shear connectors of US2005244244 A1 have integrated supports for rebars. The elements of US2005244244 thus act both as shear connectors and as rebar positioning aids.

EP1041208 A2 discloses a threaded shear connector.

US2002112436 A1 describes a quick connector for connecting rebars to anchors, which connector comprises a wire loop structure.

WO11045552 A1 describes clips for mounting reinforcing studs along a pair of rebars. The clips, which may be made of plastic or spring steel, comprise a generally planar base carrying a pair of spaced-apart, resilient deformable tabs extending in a first direction, by which the clip and stud may be latched together, and also carrying a pair of projections extending in a second direction, one of which projections is adapted to be engaged with each of the parallel rebars.

EP1830011 B1 describes S-shaped holders for reinforcement steel mesh.

US 2009188187A1 discloses systems for connecting a flooring system to a vertical wall, which may include a plurality of stand-off screws, which extend from the top of the wall into a cementitious slab and which are configured to transfer forces between the cementitious slab and the wall.

US 3401497 A discloses a shear connector stud having a post and an enlarged head and a bracket mounted on said shear connector stud for supporting a reinforcing member thereon.

It is an object of the invention to provide particularly efficient and convenient rebar positioning in connection with overlay casting.

This object is achieved by a method according to claim 1 and an anchor cap according to claim 4. Dependent claims refer to preferred embodiments of the invention.

An inventive method is characterized in that the anchor cap is fixed to the head of the screw anchor by means of a snap-fit mechanism provided on the anchor cap.

An anchor cap is fixed to the head of the screw anchor, and the at least one rebar is attached to the screw anchor via the anchor cap.

In connection with the invention, it was found that using screw anchors as shear connectors can provide particularly high productivity, particularly good ease of installation, immediate load transfer (since, compared to chemical anchors, no curing time is required), particularly good load performance and particularly low cost. An additional advantageous feature related to screw anchors is easy and fast adjustability of screw height in order bring rebars fixed thereto to a desired height. However, since the heads of screw anchors have to endure high loads during installation, it is often not easily possible to provide them with integrated rebar supports, thus requiring manual rebar support techniques, such as using individually installed wire pieces, which requires a laborious working step, potentially impairing the otherwise high productivity of screw anchoring.

In view of this, the invention proposed to use screw anchors as shear connectors, and to additionally provide standardized anchor caps, which are attachable to the heads of the screw anchors, and which provide support to the rebars. In particular, an anchor cap able to accommodate the rebar is proposed, which is plugged-onto the hexagonal-shaped head of a screw anchor. Accordingly, it is possible to combine the advantages of screw anchors with those of integrated rebar supports in a particularly easy and cost-effective manner. In particular, the positioning and optionally fixing of rebars can be simplified and sped-up without the need for separate manual joining/fastening steps.

The borehole is mainly cylindrical and will usually be a blind hole, but it can also be a through hole. The shank of the screw anchor is threaded and accordingly, the screw anchor has at least one thread provided on the shank, which is able to tap into the existing layer, which is preferably a concrete layer, to allow tapping anchorage of the threaded shank in the borehole in the existing layer. The head of the screw anchor is for transferring installation torque into the screw anchor. It can for example be a hex head. After installation of the screw anchor, the head of the screw anchor projects from the existing layer, preferably at some distance from the surface of the existing layer. The overlay is in particular a concrete overlay. Preferably, the at least one rebar and/or the head of the screw anchor get completely buried in the overlay. The at least one rebar gets attached to the screw anchor via the anchor cap, i.e. the anchor cap is attached at the one hand to the screw anchor, in particular to its head, and on the other hand to the rebar. The rebar can be of different type, e.g. rod or mesh/lattice, and/or can have various dimensions (e.g. rod diameter from 6mm to 30mm). The anchor cap can for example be made of plastic, metal or composite materials.

It is particularly preferred that the anchor cap is fixed to the head of the screw anchor after the threaded shank has been tappingly anchored in the borehole. This allows particularly efficient installation, in particular using standard tools.

Advantageously, the anchor cap is fixed to the head of the screw anchor by plugging the anchor cap onto the head. Accordingly, the head is inserted into a receptacle provided by the anchor cap, and the anchor cap clasps the head.

According to another preferred embodiment of the invention, the anchor cap is fixed to the head of the screw anchor by means of a snap-fit mechanism provided on the anchor cap. In accordance with usual definition, the snap-fit mechanism can include at least one snap element for providing interlock between the anchor cap and the head of the screw anchor. The snap element is displaced during assembly of the anchor cap on the head of the screw anchor, and relaxes when assembly is complete, thereby providing interlock between the anchor cap and the head of the screw anchor. In particular, the snap-fit mechanism can be a cantilever snap fit mechanism, wherein the cantilevers are snap-fitting hooks provided on the anchor cap, which snap-fitting hooks are intended to engage the underhead of the head of the screw. These snap-fitting hooks are the snap elements. Employing a snap-fit mechanism can permit particularly fast and easy installation.

The invention also relates to an anchor cap, in particular for use in the described method, comprising a receptacle for receiving the head of a screw anchor, and characterized in that the anchor cap further comprises at least one cradle for propping up a rebar, and at least one stop, provided at the receptacle, for supporting weight of the rebar resting in the cradle on the head received in the receptacle.

Accordingly, the anchor cap comprises at least one cradle for supporting a rebar from below, i.e. the cradle is intended to be placed under the rebar, and the anchor cap comprises also at least one stop, provided at the receptacle, for transferring weight of the rebar lying in the cradle onto the head of the screw anchor.

The cradle is intended for accommodating a rebar. The stop, which can for example be a through wall, a perforated wall, a ring or a projection, can in particular be intended to abut against the end face of the head of the screw anchor. It thus transfers weight of the rebar onto the end face of the head of the screw anchor. In addition to weight transfer at the stop, there can e.g. be also weight transfer via friction.

The anchor cap comprises a plurality of prongs for clasping the head of the screw anchor, wherein the prongs surround the receptacle. These prongs can engage behind the head positioned in the receptacle and provide a latch mechanism that keeps the head trapped in the receptacle. This can provide a particularly robust and yet easy-to-manufacture design. Preferentially, the prongs are snap-fitting hooks. Accordingly, they are flexible to allow passage of the head and to subsequently return towards their original position to clasp the head. Employing snap-fitting hooks can further facilitate installation.

The anchor cap comprises a plurality of cradle fingers, which define the cradle. These fingers project from a base of the anchor cap. It is particularly preferred that the anchor cap comprised four cradle fingers, which define two, preferably orthogonal, cradles. Using cradle fingers can provide a particularly lightweight and yet robust design.

As already mentioned, the anchor cap comprises a base, wherein the prongs project from the base into a first direction. The cradle fingers project from the base into a second direction, wherein the first direction and the second direction are opposite. This can provide a particularly efficient design.

The base is annular. The stop is provided at the base. The stop forms a constriction of the annular base, projecting into the annular base. All of this can provide a particularly efficient design.

According to another preferred embodiment of the invention, the anchor cap comprises at least two cradles, each for supporting a rebar. This can provide particularly good versatility.

The two cradles can, advantageously, be arranged orthogonally to each other. This can further increase versatility and can in particular enable the anchor cap to receive rebar mesh nodes.

The cradle can comprise a constriction that provides a snap-lock for the rebar in the cradle. The constriction can for example be formed by opposing noses that project into the cradle slot. This allows particularly firm attachment of the rebar resting in the cradle to the anchor cap, and can for example allow wall mounting or even ceiling mounting of the anchor cap.

The invention also relates to a fastener arrangement comprising a screw anchor having a threaded shank and a head, and further comprising an anchor cap as described here, wherein the head of the screw anchor is positioned in the receptacle of the anchor cap, and, in particular, clasped by the prongs of the anchor cap. Accordingly, the anchor cap is plugged onto the head of a screw anchor as intended.

The ratio of the outer thread diameter of the threaded shank to the thread pitch of the threaded shank can be between 1 and 2, especially between 1.2 and 1.45. These are typical thread dimensions for screw anchors that are intended for tapping insertion into mineral substrates, e.g. concrete or masonry substrates. In particular, and in line with the usual definition, the pitch can be understood to be the axial distance between successive turns of a thread flight.

Features that are described here in connection with the method can also be used in connection with the anchor cap and/or the fastener arrangement, and features that are described here in connection with the anchor cap and/or the fastener arrangement can also be used in connection with the other described concepts, in particular in connection with the method.

The invention is explained in greater detail below with reference to preferred exemplary embodiments, which are depicted schematically in the accompanying drawings, wherein individual features of the exemplary embodiments presented below can be implemented either individually or in any combination within the scope of the present invention which is defined by the appended claims.
- Figures 1 to 5: show successive steps of a method for placing an overlay on an existing layer.
- Figure 6: is a first perspective view of an anchor cap that can be used in the method of figures 1 to 5.
- Figure 7: is a second perspective view of the anchor cap of figure 6.
- Figure 8: is a first side view of the anchor cap of figure 6.
- Figure 9: is a second side view of the anchor cap of figure 6.
- Figure 10: is a bottom view of the anchor cap of figure 6.
- Figure 11: is a top view of the anchor cap of figure 6.
- Figure 12: is a first perspective view of an alternative anchor cap, which can be alternatively used in the method of figures 1 to 5.
- Figure 13: is a second perspective view of the anchor cap of figure 12.
- Figure 14: is a first side view of the anchor cap of figure 12.
- Figure 15: is a second side view of the anchor cap of figure 12.
- Figure 16: is a bottom view of the anchor cap of figure 12.
- Figure 17: is a top view of the anchor cap of figure 12.

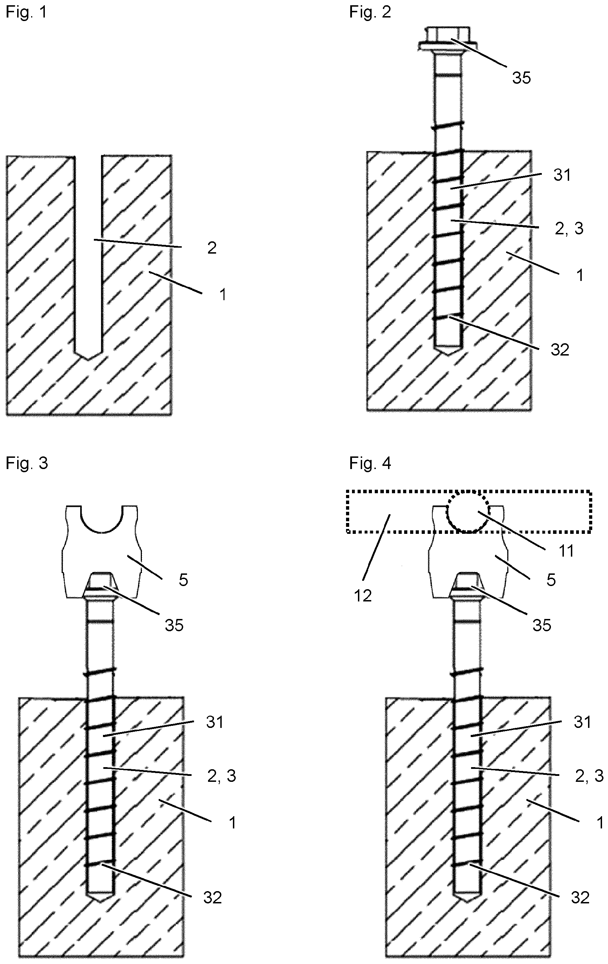

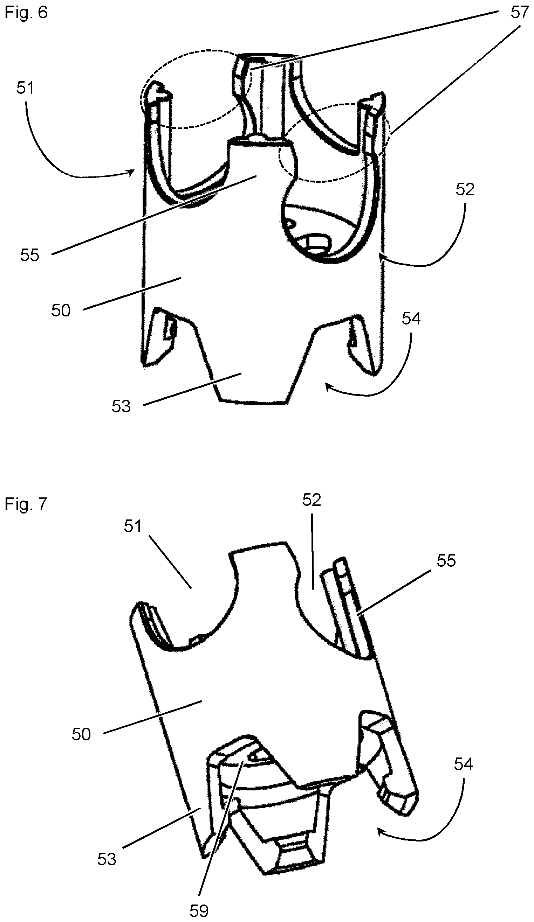

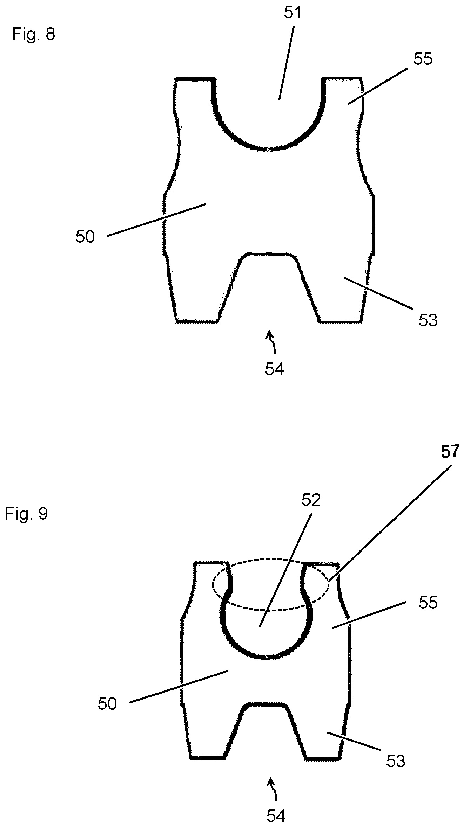

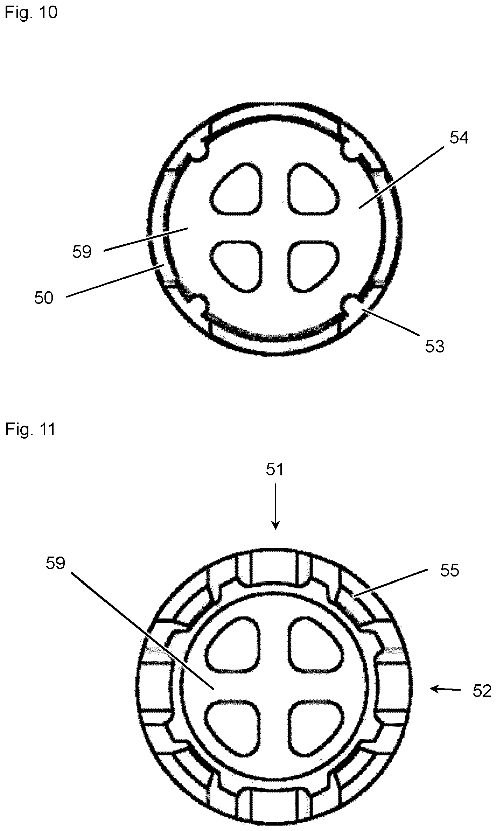

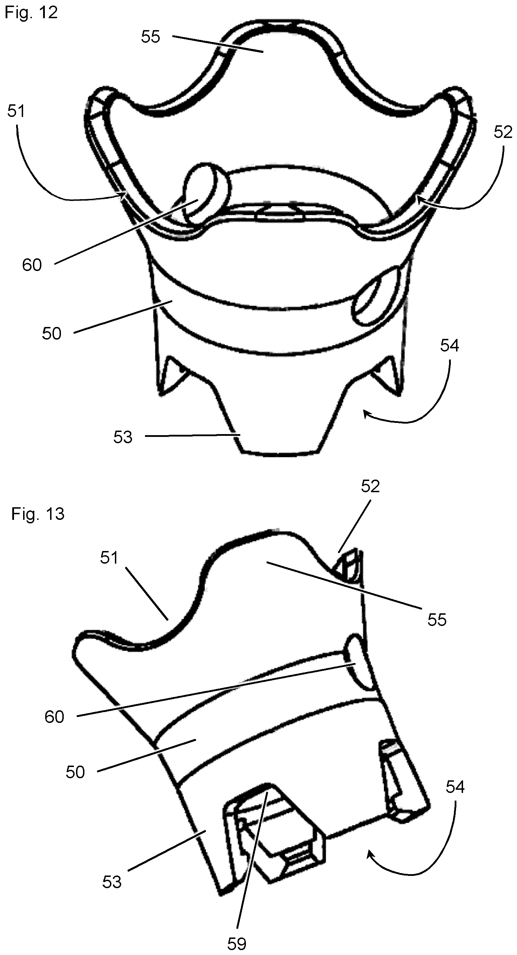

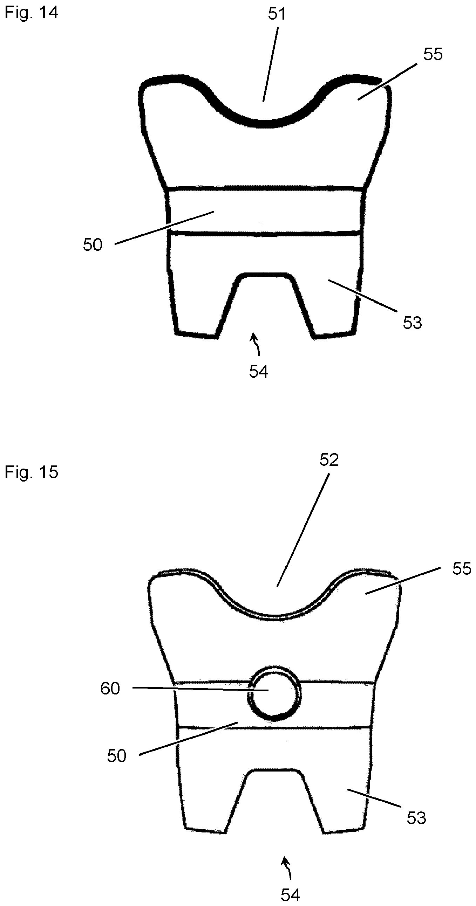

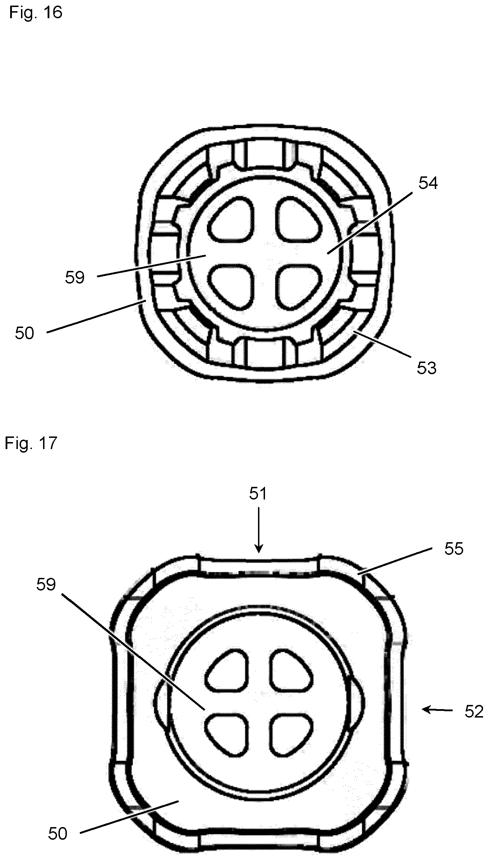

Figures 1 to 5 show successive steps of a method of placing an overlay 8, in particular a concrete overlay 8, on an existing layer 1, in particular on an existing concrete layer 1. The anchor cap of figures 6 to 11 is used in this method. Alternatively, the anchor cap of figures 12 to 17 could be used. In the shown embodiment, the existing layer 1 is a floor.

In a first step, boreholes 2 are placed in the existing layer 1. The boreholes 2 originate from that surface of the existing layer 1 that is to be covered by the overlay 8, and the boreholes 2 have approximately cylindrical shape. They may be created by boring or other suitable methods, such as reaming. The resulting structure is shown in figure 1.

In a second step, a screw anchor 3 is anchored in each of the boreholes 2. The screw anchors 3 each have a threaded shank 31 provided with a thread 32 that is capable of cutting the existing layer 1, as well as a head 35 connected to the threaded shank 31 to transfer torque. The heads 35 radially project from the respective threaded shanks 31, and in the present embodiment, the heads 35 are hex heads. The threaded shanks 31 of the screw anchors 3 are screwed into the respective boreholes 2 by applying torque and forward axial force to the respective heads 35. In the screwing-in process, the threads 32 of the threaded shanks 31 tap mating threads into the existing layer 1, thereby anchoring the screw anchors 3. In the end, the heads 35 and portions of the threaded shanks 31 project from the existing layer 1, and the structure shown in figure 2 is obtained.

In a third step, an anchor cap 5 each is plugged onto the heads 35 of at least some of the screw anchors 3, preferably on all of them, and the anchor caps 5 are fixed to the respective heads 35 by means of a snap mechanism. Details of the anchor caps 5 can be taken from figures 6 to 11.

As can be taken from figures 6 to 11, an anchor cap 5 has an annular base 50, from which projects a plurality of prongs 53 into a first direction. In the present case, the anchor cap 5 has four prongs, but other numbers, preferably three or more, are also possible. Within the annular base 50, there is a stop 59, which forms a constriction of the annular base 50. In the present embodiment, the stop 59 is a perforated wall, which comprises four perforations. However, the stop 59 could also have other shapes. For example, it could be a ring or a nose.

The prongs 53 and the stop 59 form a receptacle 54 for receiving the head 35 of the screw anchor 3. In this connection, the stop 59 is intended to rest against the end face of the head 35, whereas the prongs 53 are intended to surround the lateral surface of the head 35 and to engage the underhead of the head 35. The prongs 53 are snap-fitting hooks, that can be radially displaced elastically as the head 35 of the screw anchor 3 is pushed into the receptacle 54, and which can elastically return towards their original position once the head 35 is fully inserted into the receptacle 54, to clasp the head 35. The prongs 53 thus form the above-mentioned snap-mechanism for fixing the anchor cap 5 to the head 35.

The structure resulting from plugging anchor caps 5 onto the heads 35 and fixing the anchor caps 5 to the respective heads 35 by means of the snap mechanism is shown in figure 3.

As can be, in particular, taken from figures 6 to 11, an anchor cap 5 further comprises a plurality of cradle fingers 55, four in the present example, which project from the annular base 50, namely in a second direction that is opposite the first direction in which the prongs 53 project.

The cradle fingers 55 define two cradles 51, 52, each intended for propping up a rebar, i.e. for supporting the rebar from underneath. Each of the cradles 51, 52 extends orthogonally to the longitudinal axes of the receptacle 54 and of the screw anchor 3 received therein, i.e. a rebar placed properly in either of the cradles 51, 52 will extend orthogonally to a screw anchor 3 that has its head 35 positioned properly in the receptacle 54. Moreover, the two cradles 51 and 52 extend orthogonally to one another. Accordingly, a rebar placed properly in the cradle 51 will extend orthogonally to a rebar placed properly in the cradle 52. In particular, the node of a rebar mesh can be accommodated by the cradles 51, 52.

The cradle 52 has a constriction 57 that provides a snap-lock for a rebar accommodated within that cradle 52. The other cradle 51, is, by way of example, lacking such a constriction. The constriction 57 is dimensioned for particular rebar rod diameters (e.g. 6mm - 20mm) and permits relatively firm rebar attachment. Preferably, the constriction 57 can permit the anchor cap 5 to be used also in wall positions, without the need for additional connection. In the present embodiment, however, floor positioning is, by way of example, applied.

The cradles 51 and 52, respectively, can have different sizes to accommodate different rebar dimensions in one and the same anchor cap 5.

In a fourth step of the method, at least one rebar 11, 12 is placed on either of the cradles 51 or 52. In the present embodiment, two orthogonal rebars 11 and 12, forming the node of a rebar mesh, are placed in the cradles 51 and 52, respectively. The resulting structure is shown in figure 4. In this configuration, the anchor cap 5 props up the rebars 11, 12, and the stop 59 of the anchor cap 5 provided at the receptacle 54 transfers weight of the rebars 11, 12 resting in the cradles 51, 52 onto the head 35 of the screw anchor 3, namely via the end face of the head 35.

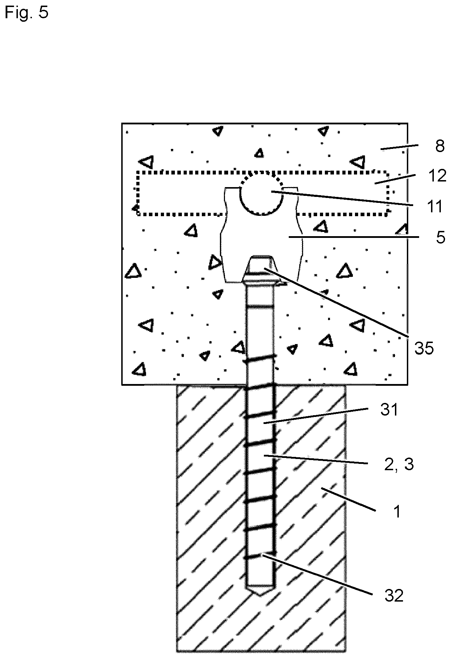

In a fifth step, the overlay 8 is cast over the existing layer 1, thereby burying the heads 35 of the screw anchors 3, the anchor caps 5 and the rebars 11, 12. The resulting structure is shown in figure 5.

Figures 12 to 17 shows another embodiment of an anchor cap 5, which could be used instead of the anchor cap 5 of figures 6 to 11 when performing the method of figures 1 to 5.

The embodiment of figures 12 to 17 and the previous embodiment of figures 6 to 11 have many features in common. Therefore, same reference numerals have been used for equivalent features, and in the following, focus will be on the differentiating features, whereas reference is made to the above-mentioned description for the common features, which description applies mutatis mutandis.

Compared to the embodiment of figures 6 to 11, where the cradle fingers 55 are essentially cylindrical, the cradle fingers 55 of the embodiment of figures 12 to 17 are conical and widen towards their free ends, resulting in broader and less pronounced cradles 51 and 52, which, as such, allow for relatively large tolerances for rebar positioning.

Moreover, neither of the cradles of the embodiment of figures 12 to 17 has a constriction.

The base 50 of the embodiment of figures 12 to 17 has through holes 60, which can for example be used for leading through wire pieces for additional rebar 11, 12 fixation.

## Claims

1. Method for placing an overlay (8) on an existing layer (1), in which
- at least one borehole (2) is provided in the existing layer (1),
- a screw anchor (3) having a threaded shank (31) and a head (35) is provided and the threaded shank (31) is tappingly anchored in the borehole (2) in the existing layer (1), so that the head (35) of the screw anchor (3) projects from the existing layer (1),
- at least one rebar (11, 12) is provided and attached to the screw anchor (3), and,
- after the threaded shank (31) has been tappingly anchored in the borehole (2) and the at least one rebar (11, 12) has been attached to the screw anchor (3), the overlay (8) is cast and the at least one rebar (11, 12) and the head (35) of the screw anchor (3) are, at least partly, buried in the overlay (8),
wherein
- an anchor cap (5) is fixed to the head (35) of the screw anchor (3),
- and the at least one rebar (11, 12) is attached to the screw anchor (3) via the anchor cap (5),
**characterized in that**
the anchor cap (5) is fixed to the head (35) of the screw anchor (3) by means of a snap-fit mechanism provided on the anchor cap (5).

2. Method according to claim 1,
**characterized in that**
the anchor cap (5) is fixed to the head (35) of the screw anchor (3) after the threaded shank (31) has been tappingly anchored in the borehole (2).

3. Method according to any one of the preceding claims,
**characterized in that**
the anchor cap (5) is fixed to the head (35) of the screw anchor (3) by plugging the anchor cap (5) onto the head (35).

4. Anchor cap (5) comprising
- a receptacle (54) for receiving the head (35) of a screw anchor (3),
- at least one cradle (51, 52) for propping up a rebar (11, 12),
- at least one stop (59), provided at the receptacle (54), for supporting weight of the rebar (11, 12) resting in the cradle (51, 52) on the head (35) received in the receptacle (54), and
- a plurality of prongs (53) for clasping the head (35) of the screw anchor (3), wherein the prongs (53) surround the receptacle (54),
**characterized in that** the anchor cap (5) further comprises
- a plurality of cradle fingers (55), which define the cradle (51, 52),
- a base (50), wherein the prongs (53) project from the base (50) into a first direction and the cradle fingers (55) project from the base (50) into a second direction, wherein the first direction and the second direction are opposite,
- wherein the base (50) is annular, and
- wherein the stop (59) is provided at the base (50) and forms a constriction of the annular base (50).

5. Anchor cap (5) according to claim 4,
**characterized in that**
the prongs (53) are snap-fitting hooks.

6. Anchor cap (5) according to any of claims 4 or 5,
**characterized in that**
the cradle (52) comprises a constriction (57) that provides a snap-lock for the rebar (12) in the cradle (52).

7. Anchor cap (5) according to any of claims 4 to 6,
**characterized in that**
it comprises at least two cradles (51, 52), each for supporting a rebar (11, 12).

8. Anchor cap (5) according to claim 7,
**characterized in that**
the two cradles (51, 52) are arranged orthogonally to each other.

9. Fastener arrangement comprising a screw anchor (3) having a threaded shank (31) and a head (35),
**characterized in that**
the fastener arrangement further comprises an anchor cap (5) according to any of claims 4 to 8, wherein the head (35) of the screw anchor (3) is positioned in the receptacle (54) of the anchor cap (5).

10. Fastener arrangement according to claim 9,
**characterized in that**
the ratio of the outer thread diameter of the threaded shank (31) to the thread pitch of the threaded shank (31) is between 1.2 and 1.45.

## Patentansprüche

1. Verfahren zum Platzieren einer Deckschicht (8) auf eine bestehende Schicht (1), wobei
- mindestens ein Bohrloch (2) in der bestehenden Schicht (1) bereitgestellt ist,
- ein Schraubanker (3), der einen Gewindeschaft (31) und einen Kopf (35) aufweist, bereitgestellt ist und der Gewindeschaft (31) in dem Bohrloch (2) in der bestehenden Schicht (1) gewindegebohrt verankert ist, derart, dass der Kopf (35) des Schraubankers (3) aus der bestehenden Schicht (1) vorsteht,
- mindestens ein Bewehrungsstab (11, 12) bereitgestellt und an dem Schraubanker (3) angebracht ist, und
- nachdem der Gewindeschaft (31) in dem Bohrloch (2) gewindegebohrt verankert wurde und der mindestens eine Bewehrungsstab (11, 12) an dem Schraubanker (3) angebracht wurde, die Deckschicht (8) gegossen wird und der mindestens eine Bewehrungsstab (11, 12) und der Kopf (35) des Schraubankers (3) in der Deckschicht (8) mindestens teilweise vergraben werden,
wobei
- eine Ankerkappe (5) an dem Kopf (35) des Schraubankers (3) fixiert wird,
- und der mindestens eine Bewehrungsstab (11, 12) an dem Schraubanker (3) über die Ankerkappe (5) angebracht wird,
**dadurch gekennzeichnet, dass**
die Ankerkappe (5) an dem Kopf (35) des Schraubankers (3) mittels eines Schnappmechanismus, der an der Ankerkappe (5) bereitgestellt ist, fixiert wird.

2. Verfahren nach Anspruch 1,
**dadurch gekennzeichnet, dass**
die Ankerkappe (5) an dem Kopf (35) des Schraubankers (3) fixiert wird, nachdem der Gewindeschaft (31) in dem Bohrloch (2) gewindegebohrt verankert wurde.

3. Verfahren nach einem der vorstehenden Ansprüche,
**dadurch gekennzeichnet, dass**
die Ankerkappe (5) an dem Kopf (35) des Schraubankers (3) fixiert wird, durch Stecken der Ankerkappe (5) auf den Kopf (35).

4. Ankerkappe (5), umfassend
- eine Aufnahme (54) zum Aufnehmen des Kopfs (35) eines Schraubankers (3),
- mindestens ein Gestell (51, 52) zum Abstreben eines Bewehrungsstabs (11, 12),
- mindestens einen Anschlag (59), der an der Aufnahme (54) bereitgestellt ist, zum Stützen des Gewichts des Bewehrungsstabs (11, 12), der auf dem Gestell (51, 52) auf dem Kopf (35) ruht, der in der Aufnahme (54) aufgenommen ist, und
- eine Vielzahl von Zinken (53) zum Umgreifen des Kopfs (35) des Schraubankers (3), wobei die Zinken (53) die Aufnahme (54) umgeben,
**dadurch gekennzeichnet, dass** die Ankerkappe (5) ferner umfasst
- eine Vielzahl von Gestellfingern (55), die das Gestell (51, 52) definieren,
- eine Basis (50), wobei die Zinken (53) von der Basis (50) in eine erste Richtung vorstehen und die Gestellfinger (55) von der Basis (50) in eine zweite Richtung vorstehen, wobei die erste Richtung und die zweite Richtung entgegengesetzt sind,
- wobei die Basis (50) ringförmig ist und
- wobei der Anschlag (59) an der Basis (50) bereitgestellt ist und eine Verengung der ringförmigen Basis (50) ausbildet.

5. Ankerkappe (5) nach Anspruch 4,
**dadurch gekennzeichnet, dass**
die Zinken (53) Schnapphaken sind.

6. Ankerkappe (5) nach einem der Ansprüche 4 oder 5,
**dadurch gekennzeichnet, dass**
das Gestell (52) eine Verengung (57) umfasst, die eine Schnappverriegelung für den Bewehrungsstab (12) in dem Gestell (52) bereitstellt.

7. Ankerkappe (5) nach einem der Ansprüche 4 bis 6,
**dadurch gekennzeichnet, dass**
sie mindestens zwei Gestelle (51, 52) umfasst, die jeweils zum Stützen eines Bewehrungsstabs (11, 12) dienen.

8. Ankerkappe (5) nach Anspruch 7,
**dadurch gekennzeichnet, dass**
die zwei Gestelle (51, 52) orthogonal zueinander angeordnet sind.

9. Befestigungsanordnung, umfassend einen Schraubanker (3), der einen Gewindeschaft (31) und einen Kopf (35) aufweist,
**dadurch gekennzeichnet, dass**
die Befestigungsanordnung ferner eine Ankerkappe (5) nach einem der Ansprüche 4 bis 8 umfasst, wobei der Kopf (35) des Schraubankers (3) in der Aufnahme (54) der Ankerkappe (5) positioniert ist.

10. Befestigungsanordnung nach Anspruch 9,
**dadurch gekennzeichnet, dass**
das Verhältnis des Außengewindedurchmessers des Gewindeschafts (31) zu der Gewindesteigung des Gewindeschafts (31) zwischen 1,2 und 1,45 liegt.

## Revendications

1. Procédé de pose d'un revêtement (8) sur une couche existante (1), dans lequel
- au moins un trou de forage (2) est fourni dans la couche existante (1),
- un ancrage de vis (3) ayant une tige filetée (31) et une tête (35) est fournie et la tige filetée (31) est ancrée par taraudage dans le trou de forage (2) dans la couche existante (1), de sorte que la tête (35) de l'ancrage de vis (3) fait saillie à partir de la couche existante (1),
- au moins une barre d'armature (11, 12) est fournie et fixée à l'ancrage de vis (3), et,
- après que la tige filetée (31) a été ancrée par taraudage dans le trou de forage (2) et que l'au moins une barre d'armature (11, 12) a été fixée à l'ancrage de vis (3), le revêtement (8) est coulé et l'au moins une barre d'armature (11, 12) et la tête (35) de l'ancrage de vis (3) sont, au moins partiellement, enfouies dans le revêtement (8),
dans lequel
- un capuchon d'ancrage (5) est fixé à la tête (35) de l'ancrage de vis (3),
- et l'au moins une barre d'armature (11, 12) est fixée à l'ancrage de vis (3) par l'intermédiaire du capuchon d'ancrage (5),
**caractérisé en ce que**
le capuchon d'ancrage (5) est fixé à la tête (35) de l'ancrage de vis (3) au moyen d'un mécanisme d'encliquetage prévu sur le capuchon d'ancrage (5).

2. Procédé selon la revendication 1,
**caractérisé en ce que**
le capuchon d'ancrage (5) est fixé à la tête (35) de l'ancrage de vis (3) après que la tige filetée (31) a été ancrée par taraudage dans le trou de forage (2).

3. Procédé selon l'une quelconque des revendications précédentes,
**caractérisé en ce que**
le capuchon d'ancrage (5) est fixé à la tête (35) de l'ancrage de vis (3) en emboîtant le capuchon d'ancrage (5) sur la tête (35).

4. Capuchon d'ancrage (5) comprenant
- un réceptacle (54) pour recevoir la tête (35) d'un ancrage de vis (3),
- au moins un berceau (51, 52) pour étayer une barre d'armature (11, 12),
- au moins une butée (59), prévue au niveau du réceptacle (54), pour supporter le poids de la barre d'armature (11, 12) reposant dans le berceau (51, 52) sur la tête (35) reçue dans le réceptacle (54), et
- une pluralité de dents (53) pour serrer la tête (35) de l'ancrage de vis (3), dans lequel les dents (53) entourent le réceptacle (54),
**caractérisé en ce que** le capuchon d'ancrage (5) comprend en outre
- une pluralité de doigts de berceau (55), qui définissent le berceau (51, 52),
- une base (50), dans lequel les dents (53) font saillie depuis la base (50) dans une première direction et les doigts de berceau (55) font saillie de la base (50) dans une seconde direction, dans lequel la première direction et la seconde direction sont opposées,
- dans lequel la base (50) est annulaire, et
- dans lequel la butée (59) est prévue au niveau de la base (50) et forme un étranglement de la base annulaire (50).

5. Capuchon d'ancrage (5) selon la revendication 4,
**caractérisé en ce que**
les dents (53) sont des crochets d'encliquetage.

6. Capuchon d'ancrage (5) selon l'une quelconque des revendications 4 ou 5,
**caractérisé en ce que**
le berceau (52) comprend un étranglement (57) qui fournit un encliquetage pour la barre d'armature (12) dans le berceau (52).

7. Capuchon d'ancrage (5) selon l'une quelconque des revendications 4 à 6,
**caractérisé en ce qu'**
il comprend au moins deux berceaux (51, 52), chacun pour supporter une barre d'armature (11, 12).

8. Capuchon d'ancrage (5) selon la revendication 7,
**caractérisé en ce que**
les deux berceaux (51, 52) sont agencés orthogonalement l'un à l'autre.

9. Agencement de fixation comprenant un ancrage de vis (3) ayant une tige filetée (31) et une tête (35),
**caractérisé en ce que**
l'agencement de fixation comprend en outre un capuchon d'ancrage (5) selon l'une quelconque des revendications 4 à 8, dans lequel la tête (35) de l'ancrage de vis (3) est positionnée dans le réceptacle (54) du capuchon d'ancrage (5).

10. Agencement de fixation selon la revendication 9,
**caractérisé en ce que**
le rapport du diamètre de filetage externe de la tige filetée (31) au pas de filetage de la tige filetée (31) est compris entre 1,2 et 1,45.
